# EUROPÄISCHE PATENTANMELDUNG

(11) **EP 0 968 877 A2**
(43) Veröffentlichungstag der Anmeldung: **05.01.2000**
(21) Anmeldenummer: 99111585.8
(22) Anmeldetag: 15.06.1999
(51) Int. Cl.: B60N 3/10

(54) **Halterung für einen Getränkebehälter**

(30) Priorität: 29.06.1998 DE 29811572 U; 04.09.1998 DE 19840386
(71) Anmelder: fischerwerke Artur Fischer GmbH & Co. KG, 72178 Waldachtal (DE); DaimlerChrysler AG, 70546 Stuttgart (DE)
(72) Erfinder: Plocher, Bernd, 72108 Rottenburg-Seebronn (DE); Kühn, Stefan, 75387 Neubulach (DE); Schanz, Friedrich, 72218 Wildberg (DE); Lemke, Gerd, 72124 Pliezhausen (DE)

(57) **Zusammenfassung**

Die Erfindung betrifft einen Halter (10) mit einem nach unten schwenkbaren Deckel (14) und einem nach oben schwenkbaren Haltering (16). Zum einfachen Öffnen und Schließen des Halters (10) schlägt die Erfindung vor, den Haltering (16) federbetätigt nach oben zu schwenken und mittels einer Verriegelungseinrichtung gegen die Federkraft in einer nach unten geschwenkten Haltestellung zu halten, wobei die Verriegelungseinrichtung durch Öffnen des Deckels (14) entriegelt wird.

## Beschreibung

Die Erfindung betrifft einen Halter für einen Getränkebehälter, der zum Einbau bspw. in einem Armaturenbrett in einem Kraftfahrzeug vorgesehen ist, mit den Merkmalen des Oberbegriffs des Anspruchs 1.

Derartige Halter zum Einstellen eines Getränkebehälters wie bspw. eine Tasse, einen Becher oder eine Getränkedose, sind an sich bekannt. Die bekannten Getränkebehälter weisen bspw. einen Haltearm auf, der einen in den Halter eingestellten Getränkebehälter am Umfang stützt und dadurch gegen Umfallen oder Herausfallen aus dem Halter sichert. Bei Nichtgebrauch läßt sich der Haltearm bspw. durch Verschieben oder Verschwenken in eine Grundstellung bewegen.

Auch ist es bekannt, den Halter mit einem Deckel auszubilden, mit dem der Halter einschließlich des in der Grundstellung befindlichen Haltearms bei Nichtgebrauch abdeckbar ist.

Der Erfindung liegt die Aufgabe zugrunde, einen Halter der eingangs genannten Art so auszubilden, daß der Haltearm in seiner Grundstellung festgelegt ist.

Diese Aufgabe wir erfindungsgemäß durch die Merkmale des Anspruchs 1 gelöst. Der erfindungsgemäße Halter weist eine Verriegelungseinrichtung auf, die den Haltearm in der Grundstellung verriegelt. Durch Öffnen des Deckels des Halters wird die Verriegelungseinrichtung entriegelt, so daß der Haltearm in seine Haltestellung bewegbar ist.

Die Erfindung hat den Vorteil, daß der Haltearm bei geschlossenem Deckel in seiner Grundstellung verriegelt ist, es werden insbesondere Klappergeräusche durch beim Fahren auftretende Vibrationen und Stöße vermieden.

In bevorzugter Ausgestaltung der Erfindung ist vorgesehen, daß der Deckel in seiner offenen Stellung als Stütze zum Abstellen eines in den Halter eingestellten Getränkebehälters dient. Dazu ist es bei einer Ausgestaltung der Erfindung vorgesehen, daß der Deckel in seiner offenen Stellung eine in etwa horizontale Lage einnimmt und sich mit Abstand unterhalb des Haltearms befindet, wenn der Haltearm seine Haltestellung einnimmt. Dadurch ist ein sicherer Halt eines eingestellten Getränkebehälters gewährleistet. Der Deckel kann als Schale ausgebildet sein, um überschwappende Flüssigkeit aus dem Getränkebehälter aufzunehmen. Bei einer Ausgestaltung der Erfindung ist der Deckel schwenkbar am Halter angebracht. Er läßt sich zum Öffnen, also zum Bewegen aus der Schließstellung in die offene Stellung, in eine in etwa horizontale Lage unterhalb des Haltearms herabschwenken.

Bei einer Ausgestaltung der Erfindung ist der Haltearm als Haltering ausgebildet, der in seiner Haltestellung einen in den Halter eingestellten Getränkebehälter umgreift. Der Haltearm kann auch als Teilring ausgebildet sein, der einen in den Halter eingestellten Getränkebehälter nicht auf seinem gesamten Umfang umgreift.

Bei einer Ausgestaltung der Erfindung ist der Haltearm zum Bewegen aus der Grund- in die Haltestellung nach oben schwenkbar am Halter angebracht. Dies hat, insbesondere bei nach unten schwenkbarem Deckel, den Vorteil, daß der Deckel in seiner Schließstellung den Haltearm in dessen Grundstellung abdeckt und durch das Herabschwenken des Deckels beim Öffnen und das nach oben Schwenken des Haltearms in die Haltestellung ein vertikaler Abstand zwischen Haltearm und Deckel erreicht wird, der notwendig ist, um einen in den Halter eingestellten Getränkebehälter sicher zu halten.

In bevorzugter Ausgestaltung wird der Haltearm von einem Federelement in die Haltestellung bewegt. Diese Ausgestaltung der Erfindung hat den Vorteil, daß nach Öffnen des Deckels der Haltearm selbsttätig in die Haltestellung schwenkt, da durch das Öffnen des Deckels die Verriegelungseinrichtung entriegelt und der Haltearm dadurch freigegeben wird. Die Verriegelungseinrichtung hat bei dieser Ausgestaltung der Erfindung den Vorteil, daß sie den Haltearm in der Grundstellung verriegelt, wenn der Haltearm aus der Haltestellung in die Grundstellung bewegt wird. Der Haltearm braucht dadurch während des Schließens des Deckels nicht gegen die Kraft des Federelements gehalten werden, das den Haltearm nach Öffnen des Deckels in die Haltestellung drückt. Schließen und Öffnen des erfindungsgemäßen Halters sind dadurch vereinfacht.

Bei einer Ausgestaltung der Erfindung ist ein Schieber vorgesehen, der den Haltearm in seiner Grundstellung verriegelt. Der Schieber wird durch Öffnen des Deckels aus einer ersten in eine zweite Stellung verschoben und gibt dabei den Haltearm frei, so daß der Haltearm nach Öffnen des Deckels in die Haltestellung bewegbar ist und sich insbesondere federbetätigt selbständig in die Haltestellung bewegt.

Bei einer Weiterbildung der Erfindung weist der Haltearm eine mit dem Schieber zusammenwirkende Rastnase auf. Diese hintergreift in der Grundstellung des Haltearms eine Hinterschneidung des Schiebers, so daß der Haltearm in der Grundstellung verriegelt ist. Durch Verschieben des Schiebers aus der ersten in die zweite Stellung gelangt die Rastnase außer Eingriff vom Schieber, wodurch der Haltearm freikommt. In bevorzugter Ausgestaltung der Erfindung weist der Schieber eine Ausrückfläche auf, die beim Verschieben des Schiebers aus der ersten in die zweite Stellung an der Rastnase des Haltearms entlang gleitet und dadurch die Rastnase außer Eingriff vom Schieber drückt, so daß der Haltearm frei kommt. Die Erfindung wird nachfolgend anhand eines in der Zeichnung dargestellten Ausführungsbeispiels näher erläutert. Es zeigen:
- Figur 1: einen erfindungsgemäßen Halter in geschlossener Stellung in Vorderansicht;
- Figur 2: den Halter aus Figur 1 in geschlossener Stellung in Rückansicht;
- Figur 3: den Halter aus Figur 1 mit geöffnetem Deckel und in einer Grundstellung befindlichem Haltering in Vorderansicht;
- Figur 4: den Halter aus Figur 1 mit offenem Deckel und in einer Grundstellung befindlichem Haltering in Rückansicht,
- Figur 5: den vollständig geöffneten Halter aus Figur 1 in Vorderansicht;
- Figur 6: den vollständig geöffneten Halter aus Figur 1 in Rückansicht;
- Figur 7: eine Prinzipsskizze einer Verriegelungseinrichtung des Halters aus Figur 1 in Blickrichtung des Pfeils VII in Figur 2.

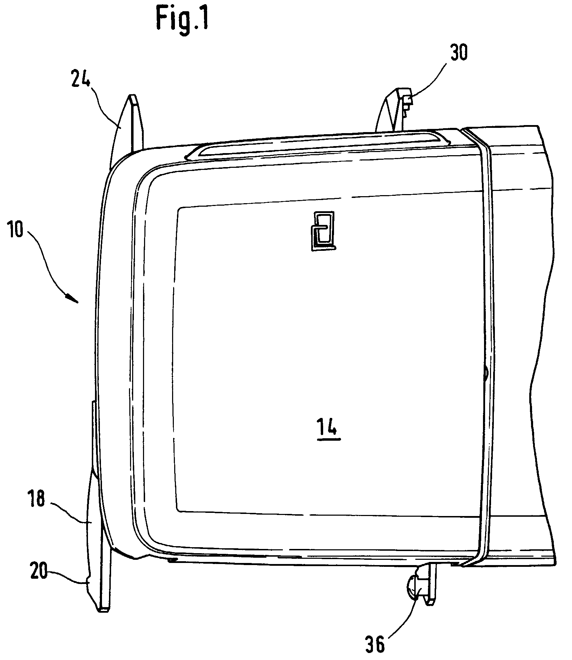

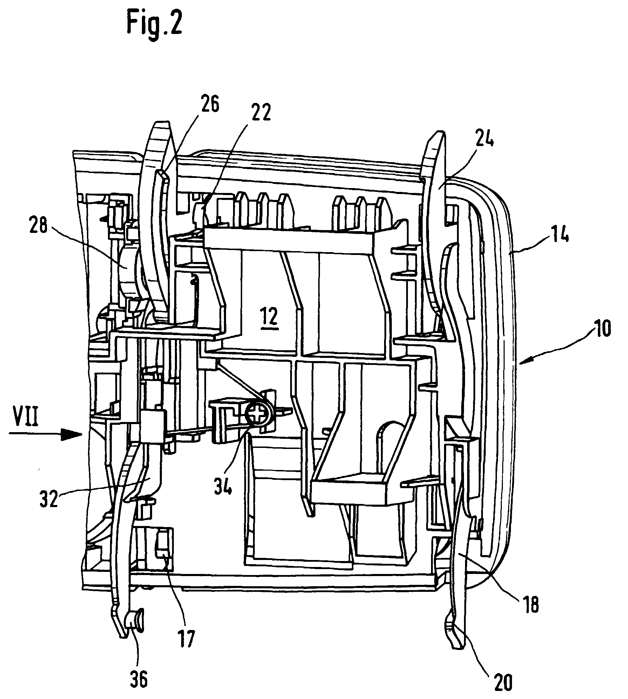

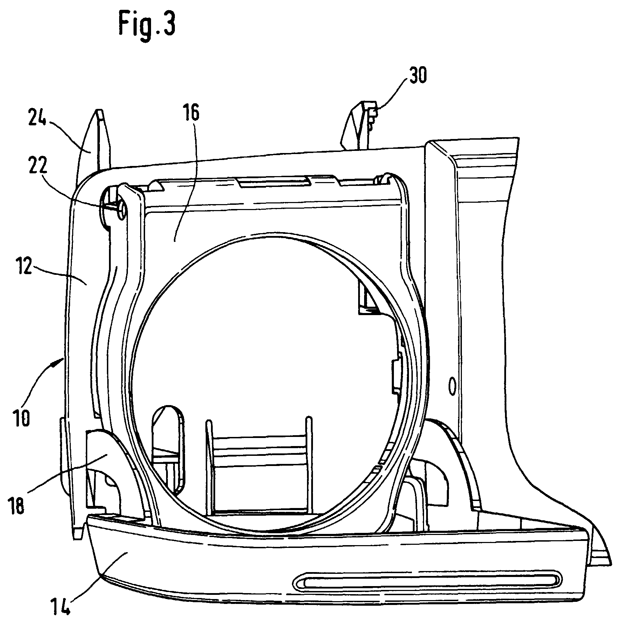

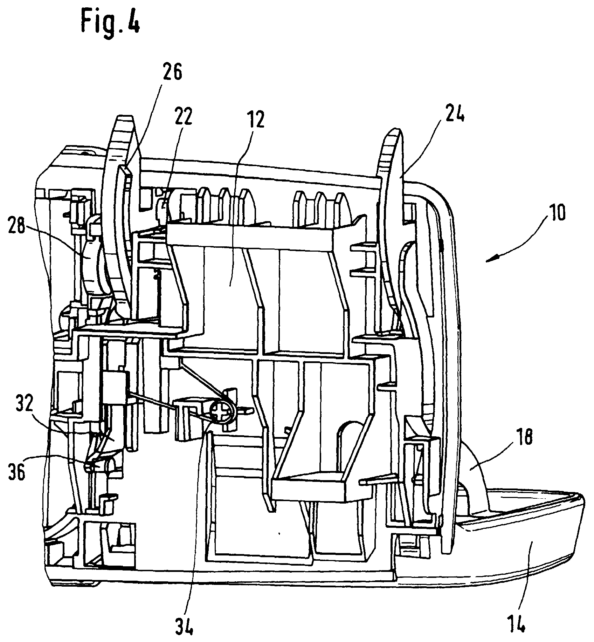

Der in Figuren 1 und 2 in geschlossener Stellung dargestellte, erfindungsgemäße Halter 10 zum Einstellen eines nicht dargestellten Getränkebehälters wie bspw. einer Tasse, einem Becher oder einer Getränkedose, ist zum Einbau in ein Armaturenbrett eines nicht dargestellten Kraftwagens vorgesehen. Der Halter 10 weist eine Grundplatte 12 auf, an der ein schalenförmiger Deckel 14 angebracht ist, der in einer Schließstellung die Grundplatte 12 sowie einen Haltering 16 (Figur 3) mit seiner Hohlseite abdeckt. Die Grundplatte 12 weist zwei Schwenkzapfen 17 nahe einem unteren Rand auf, die seitlich in Löcher des Deckels 14 eingreifen. Auf diese Weise ist der Deckel 14 um eine von den Schwenkzapfen 17 definierte, nicht dargestellte, horizontale Schwenkachse nahe seines unteren Randes nach unten in eine horizontale, offene Stellung schwenkbar, die in Figuren 3 und 4 dargestellt ist. Am Deckel 14 sind bogenförmige Arme 18 angebracht, die Aussparungen der Grundplatte 12 durchgreifen und mit Endanschlägen 20 den Schwenkwinkel des Deckels 14 begrenzen.

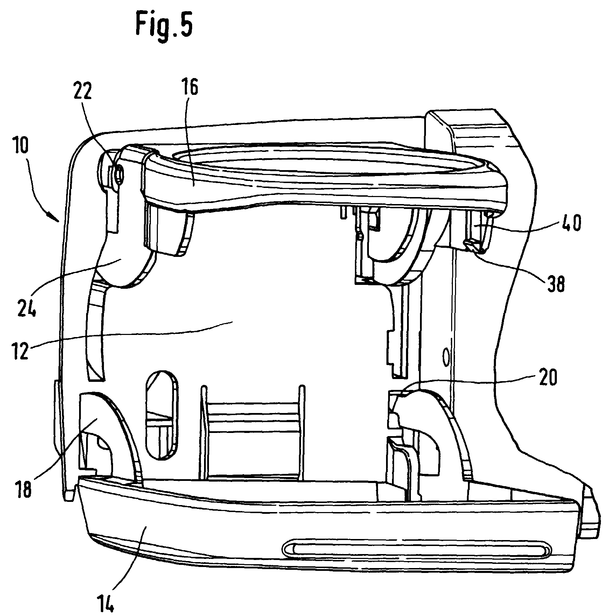

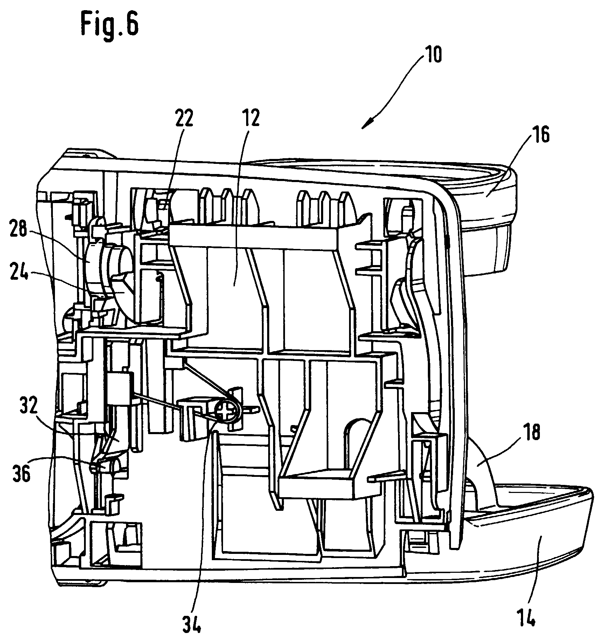

Der bereits genannte Haltering 16 ist mit einer Schwenkzapfenverbindung 22 im Bereich eines oberen Randes der Grundplatte 12 schwenkbar mit dieser verbunden. Die Schwenkzapfenverbindung 22 definiert eine nicht dargestellte, horizontale Schwenkachse im Bereich des oberen Randes der Grundplatte 12. Der Haltering 16 ist aus der in Figur 3 dargestellten Haltestellung, in der er sich vertikal auf der Grundplatte 12 befindet, nach oben in eine horizontale Haltestellung schwenkbar, die in Figuren 5 und 6 dargestellt ist. Der Haltering 16 weist zwei bogenförmige Arme 24 auf, die Aussparungen der Grundplatte 12 durchgreifen und mit Endanschlägen 26 den Schwenkwinkel des Halterings 16 begrenzen.

Der Haltering 16 wird von zwei in der Zeichnung nicht sichtbaren Schenkelfedern aus der Grund- in die Haltestellung verschwenkt. Ein an sich bekannter Rotationsdämpfer 28 dämpft die Schwenkbewegung des Halterings 16. Ein in der Zeichnung nicht sichtbares Zahnrad des Rotationsdämpfers 28 kämmt mit einer kreisbogenförmigen Zahnstange 30, die an einem der beiden den Schenkwinkel des Halterings 16 begrenzende Arme 24 angeordnet ist und deren Ende in Figuren 1 und 3 sichtbar ist.

In der in Figuren 5 und 6 dargestellten, geöffneten Stellung des Halters 10 befindet sich der Haltering 16 in horizontaler Lage mit Abstand oberhalb des in seiner offenen, horizontalen Stellung befindlichen Deckels 14. Ein nicht dargestellter Getränkebehälter läßt sich in den Haltering 16 einstellen, er steht auf dem Deckel 14 auf. Der Deckel 14 bildet eine Auffangschale für aus dem Getränkebehälter überschwappende Flüssigkeit.

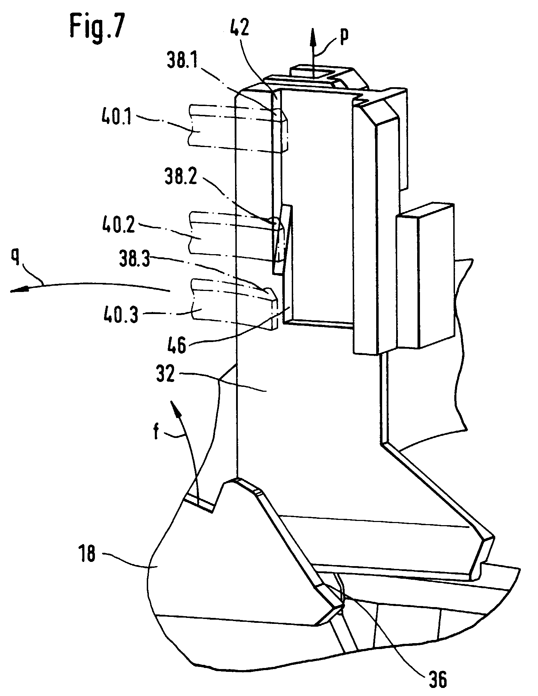

Der Halter 10 weist eine Verriegelungseinrichtung mit einem Schieber 32 auf, der in vertikaler Richtung verschiebbar auf einer Rückseite der Grundplatte 12 geführt ist. Der Schieber 32 wird von einer Schenkelfeder 34 nach unten gedrückt. Beim Öffnen des Deckels 14, also beim Herabschwenken des Deckels 14 aus der Schließstellung in die offene Stellung, gelangt ein seitlich am Ende eines der beiden Arme 18 des Deckels 14 angebrachter Schiebezapfen 36 in Anlage an den Schieber 32 (Figuren 4 und 6) und verschiebt den Schieber 32 gegen die Kraft der Schenkelfeder 34 nach oben. Der Schiebezapfen 36 gelangt erst nahe dem Ende des Schwenkwegs des Deckels 14 in Anlage an den Schieber 32, so daß der Schieber 32 erst kurz vor Erreichen der offenen Stellung des Deckels 14 verschoben wird. Durch die Verschiebung entriegelt der Schieber 32 den Haltering 16, so daß dieser aus seiner Grundstellung in die Haltestellung verschwenkt. Die Entriegelung des Halterings 16 ist in Figur 7 dargestellt, die eine in Figuren 2, 4 und 6 dem Blick abgewandte Seite des Schiebers 32 zeigt. Der Schieber 32 wirkt mit einer Rastnase 38 (Figur 5) zusammen, die über eine Federzunge 40 an einer Unterseite des Halterings 16 angebracht ist. In der Grundstellung des Halterings 16 hintergreift die Rastnase 38 eine Hinterschnittfläche 42 des Schiebers 32 und verriegelt dadurch den Haltering 16 in seiner Haltestellung gegen die Kraft der nicht sichtbaren Schenkelfedern.

Die Verrieglungsposition der Rastnase 38 ist in Figur 7 links dargestellt und durch die Bezugszahl 38.1 bezeichnet. Beim Öffnen des Deckels 14 verschwenkt dessen einer Arm 18 in Richtung des Pfeils f, wodurch der Schiebezapfen 36 in Anlage an den Schieber 32 gelangt. Der Schiebezapfen 36 verschiebt den Schieber 32 gegen die Kraft der Schenkelfeder 34 vertikal nach oben, diese Richtung ist in Figur 7 mit Pfeil p dargestellt, sie geht in Figur 7 nach links. Durch die Verschiebung des Schiebers 32 gelangt die Rastnase 38 des Halterings 16 gegen eine Ausrückfläche 44. Die Ausrückfläche 44 ist senkrecht auf der Hinterschnittfläche 42 stehend angeordnet und verläuft schräg über die Hinterschnittfläche 42 hinweg. Die Ausrückfläche 44 drückt die Rastnase 38 zur Seite und dadurch von der Hinterschnittfläche 42 herunter, so daß die Rastnase 38 außer Eingriff von der Hinterschnittfläche 42 gelangt. Mit 38.2 ist in Figur 7 eine Zwischenstellung gezeigt, in der die Rastnase 38 an der Ausrückfläche 44 entlanggleitet. Mit 38.3 ist in Figur 7 die Stellung der Rastnase 38 gezeichnet, in der diese von der Hinterschnittfläche 42 frei und damit der Haltering 16 entriegelt ist. Der Haltering 16 verschwenkt federbetätigt in seine Haltestellung wobei sich die Rastnase 38 in Richtung des Pfeils q in Figur 7 vom Schieber 32 entfernt.

In Figur 7 ist der Schieber 32 feststehend dargestellt, wogegen sich die Rastnase 38 relativ zum Schieber 32 nach rechts bewegt. Tatsächlich ist die Rastnase 38 feststehend und der Schieber 32 bewegt sich in Figur 7 nach links.

Zum Schließen des Halters 10 wird der Haltering 16 in seine Haltestellung nach unten gedrückt. Dadurch gelangt die Rastnase 38 auf eine zweite Hinterschnittfläche 46 des Schiebers 32, die sich um die Breite der Ausrückfläche 44 versetzt zur Hinterschnittfläche 42 befindet. Die Rastnase 38 hintergreift die Hinterschnittfläche 46, so daß der Haltering 16 in seiner Haltestellung verriegelt ist. Anschließend wird der Deckel 14 geschlossen. Dadurch bewegt sich der Arm 18 des Deckels 14 entgegen der Richtung des Pfeils f, der Schiebezapfen 36 entfernt sich vom Schieber 32 und der Schieber 32 wird von der Schenkelfeder 34 entgegen der Pfeilrichtung p in Figur 7 verschoben. Bei dieser Verschiebung des Schiebers 32 gelangt die Rastnase 38 von der zweiten Hinterschnittfläche 46 auf die erste Hinterschnittfläche 42 des Schiebers 32, d.h. der Haltering 14 bleibt bei der Rückverschiebung des Schiebers 32 verriegelt. Die Verriegelung des Halterings 16 kann also in jeder Schiebestellung des Schiebers 32 erfolgen, die Entriegelung erfolgt durch die Verschiebung des Schiebers 32 gegen die Kraft der Schenkelfeder 34 beim Öffnen des Deckel 14.

## Patentansprüche

1. Halter für einen Getränkebehälter, mit einem Haltearm, der aus einer Grundstellung in eine Haltestellung bewegbar ist, wobei der Haltearm in seiner Haltestellung einen in den Halter eingestellten Getränkebehälter am Umfang stützt, und mit einem Deckel, der aus einer Schließstellung in eine offene Stellung bewegbar ist, dadurch gekennzeichnet, daß der Halter (10) eine Verriegelungseinrichtung (32, 38) aufweist, die den Haltearm (16) in der Grundstellung verriegelt und durch Öffnen des Deckels (14) entriegelt wird.

2. Halter nach Anspruch 1, dadurch gekennzeichnet, daß der Deckel (14) in seiner offenen Stellung eine in etwa horizontale Lage mit Abstand unterhalb des Haltearms (16) einnimmt.

3. Halter nach Anspruch 2, dadurch gekennzeichnet, daß der Deckel (14) in seine offene Stellung nach unten schwenkbar am Halter (10) angebracht ist.

4. Halter nach Anspruch 1, dadurch gekennzeichnet, daß der Haltearm (16) als ein in seiner Haltestellung einen in den Halter (10) eingestellten Getränkebehälter umgreifender Haltering (16) ausgebildet ist.

5. Halter nach Anspruch 1, dadurch gekennzeichnet, daß der Haltearm (16) in die offene Stellung nach oben schwenkbar am Halter (10) angebracht ist.

6. Halter nach Anspruch 1, dadurch gekennzeichnet, daß der Halter (10) ein Federelement aufweist, das den Haltearm (16) in die Haltestellung bewegt.

7. Halter nach Anspruch 1, dadurch gekennzeichnet, daß die Verriegelungseinrichtung einen Schieber (32) aufweist, der durch Öffnen des Deckels (14) aus einer ersten in eine zweite Stellung verschoben wird und dabei den Haltearm (16) freigibt.

8. Halter nach Anspruch 7, dadurch gekennzeichnet, daß der Haltearm (16) eine Rastnase (38) aufweist, die in der Grundstellung des Haltearms (16) mit dem Schieber (32) in Eingriff steht und dadurch den Haltearm (16) in der Grundstellung verriegelt und die durch Verschieben des Schiebers (32) aus der ersten in die zweite Stellung außer Eingriff vom Schieber (32) gelangt.

9. Halter nach Anspruch 8, dadurch gekennzeichnet, daß der Schieber (32) eine Ausrückfläche (44) aufweist, die beim Verschieben des Schiebers (32) von der ersten in die zweite Stellung die Rastnase (38) des Haltearms (16) außer Eingriff vom Schieber (32) bringt.
